# EUROPEAN PATENT SPECIFICATION

(11) **EP 1 084 642 B1**
(45) Date of publication and mention of the grant of the patent: **20.10.2004**
(21) Application number: 00300870.3
(22) Date of filing: 03.02.2000
(51) Int. Cl.: A44B 17/00, A41H 37/00

(54) **A tape-mounted fastener and method of manufacture thereof**
Druckknopfverschluss mit Band und Verfahren zu ihrer Herstellung
Un bouton pression monté sur un ruban et sa méthode de fabrication

(30) Priority: 17.09.1999 JP 26382799; 27.12.1999 JP 36861499
(43) Date of publication of application: 21.03.2001
(73) Proprietor: Morito Co., Ltd., Osaka 541-0054 (JP)
(72) Inventor: Kawahara, Masahiko, Osaka 562-0045 (JP)
(74) Representative: Laight, Martin Harvey

(56) References cited:
- US-A- 3 378 893
- US-A- 3 800 368
- US-A- 4 250 596
- US-A- 4 705 469
- US-A- 4 805 272
- US-A- 5 357 659
- PATENT ABSTRACTS OF JAPAN vol. 1998, no. 06, 30 April 1998 (1998-04-30) & JP 10 033211 A (MORITO KK;AMAGASAKI SEIKAN KK), 10 February 1998 (1998-02-10)

## Description

The present invention relates to a tape-mounted fastener, for example a fastener made of synthetic resin usable in the openings of clothing, bags, shoes, etc., and to a method of manufacture thereof.

Generally a tape-mounted fastener comprises a male tape consisting of several synthetic resin male parts moulded and fastened onto a cloth tape at certain intervals and a female tape consisting of several synthetic resin female parts moulded and fastened onto a cloth tape at the same intervals as the male parts (e.g. as shown in EP-B-0228293 by the present applicant). While such a tape-mounted fastener has mounting holes established on cloth tapes, a tape-mounted fastener comprising male parts and female parts firmly moulded and fastened without mounting holes pierced on cloth tapes is also known (e.g. as shown in JP-A-10-33211 by the present applicant).

The present invention is an improvement on the latter invention, and in particular in respect of the male parts. A first objective of the present invention is to reduce the thickness of the entire fastener by lowering the height of the engagement protrusion of the male parts without detriment to their strength. A second objective of the present invention is to reduce the size of the male parts without detriment to their strength. A third objective of the present invention is to make the junction of the cloth tapes and the synthetic resin of the male and female parts more stable, thereby preventing the cloth from emerging from the synthetic resin of the male and female parts or the cloth from bending or undulating as a result of the injection pressure. The objectives relate generally to preferred embodiments of the invention.

The present invention in one aspect relates to a tape-mounted fastener comprising a male tape and a female tape, the male tape comprising a cloth tape on which at least one male part is moulded and fastened and the female tape comprising a cloth tape on which at least one female part is moulded and fastened, the or each male part having an engagement protrusion for coupling to a corresponding engagement indentation of a female part, said male part and said female part being made of synthetic resin, said cloth tapes having a course texture which allows the percolation of molten resin under a moulding pressure through the tape, and said cloth tapes being uninterrupted within the boundaries of the male and female parts.

In accordance with one aspect of the invention such a fastening device is characterised in that for the or each male part, the outer boundary of the male part where it is moulded on the cloth tape is substantially the same size as the outer boundary of the engagement protrusion on both sides of the cloth tape.

In particular, there is provided in accordance with the invention in one aspect a method of manufacturing a tape-mounted fastener, the method comprising: positioning a cloth tape in a moulding chamber having a shape corresponding to a male or female fastener to be manufactured, the male part having an engagement protrusion for coupling to a corresponding engagement indentation of a female part and, feeding a synthetic resin into the moulding chamber, to form the desired fastener moulded and fastened to the tape, the cloth tape being uninterrupted within the boundary of the fastener, characterised in that the outer boundary of the male part where it is moulded on the cloth tape is substantially the same size as the outer boundary of the engagement protrusion on both sides of the cloth tape, and in that the cloth tape has a coarse texture which allows the percolation of molten resin under a moulding pressure through the tape; and in that the method includes holding the cloth tape in a required position by upper and lower central projections of the moulding chamber during the injection of synthetic resin into the moulding chamber, the injection of synthetic resin into the moulding chamber being performed via an injection port in the moulding chamber on the fastener body.

In accordance with one preferred feature, the method includes the steps of moulding onto the cloth tape a male part having an engagement protrusion for coupling to a corresponding female part, the method including holding the cloth tape in a required position by projections of the moulding chamber which extend towards each other from upper and lower dies at a central region of the male part, such that after moulding the male part, the holding projections have formed an upper indentation in the male part, inside the engagement protrusion of the male part and a lower indentation on the underside of the male part.

In accordance with another preferred feature, the method includes the steps of moulding onto the cloth tape a female part having an engagement indentation for coupling to a corresponding male part, the method including holding the cloth tape in a required position by projections of the moulding chamber which extend towards each other from upper and lower dies at a central region of the female part, such that after moulding the female part, the holding projections have formed an upper indentation in the female part forming the engagement indentation of the female part, and a lower indentation on the underside of the female part.

The male parts and the female parts should preferably have a ring shape when viewed from the front or from the back. However, the interior profile of the male parts and the exterior profile of the female parts, which have no relevance to the engagement, may be freely designed from an aesthetic point of view.

According to one feature of the present invention, the engagement edge of either the male parts or the female parts of the tape-mounted fastener may be polygonal.

The bulging (or protruding) edges for engagement are preferably formed on both the outside and inside of the tip of the engagement protrusions of the male parts. With this design, the male parts can also function as female parts in that the inside bulging edges of the male parts can engage with the outside bulging edges of another group of male parts.

According to the present invention in some aspects, the height of the engagement protrusions of the male parts can be made lower by as much as the height of the base of the prior art, resulting in a smaller overall thickness of the fastener without detriment to its strength.

Because there is no base, the size of the male parts can also be made smaller without detriment to the fastener's strength.

Because the central indentations of both the male and female parts can be sandwiched and fastened by the upper and lower dies during the moulding process, the injection pressure is applied to only a small area, boosting the stability of the junction between the cloth tape and the synthetic resin of the male parts. As a result, the cloth does not emerge from the synthetic resin of the male and female parts to give an unsightly protrusion from the resin.

Embodiments of the present invention will now be described by way of example with reference to the accompanying drawings in which:
FIGS. 1(a) and (b) are plan views of a tape-mounted fastener embodying the present invention as viewed from the junction side: FIG. 1(a) being the female part side, and FIG. 1(b) being the male part side;
FIG. 2 is a plan view of a male part embodying the present invention;
FIG. 3 is a cross sectional view of the male part of FIG. 2;
FIG. 4 is a plan view of a female part embodying the present invention;
FIG. 5 is a cross sectional view of the female part of FIG. 4;
FIG. 6 is a cross sectional view showing the condition in which a male part and a female part embodying the present invention are engaged;
FIG. 7 is a plan view of a male part according to a second embodiment of the present invention as viewed from the junction side;
FIG. 8 is a plan view of a female part according to a third embodiment of the present invention as viewed from the junction side;
FIG. 9 is a cross sectional view of a conventional male part;
FIG. 10 is a plan view of a male part of the fourth embodiment of the present invention;
FIG. 11 is a cross sectional view of the male part of FIG. 10;
FIG. 12 shows cross sections of the components of the first and fourth embodiments showing their respective relations.

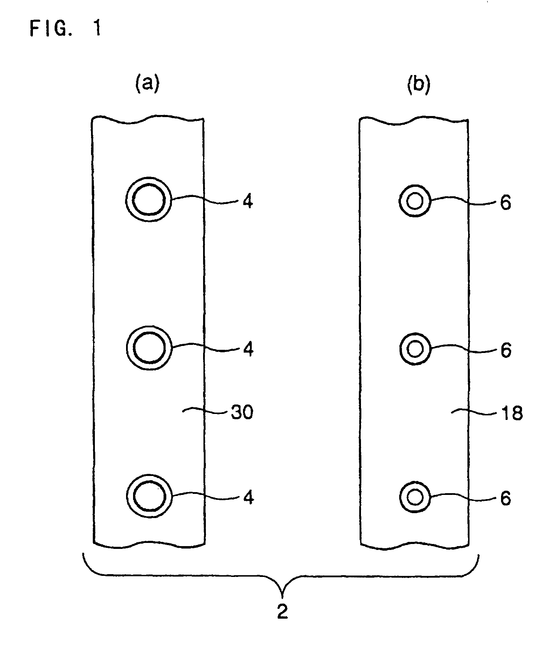

FIGS. 1 (a) and (b) are plan views of a tape-mounted fastener 2 embodying the present invention viewed from the junction side, FIG. 1(a) is the side for male parts 4 and FIG. 1 (b) is the side for female parts 6. Both the male parts and the female parts have near ring shapes. Although the other sides of the male and female parts are not shown, they both have ring shapes. The rings on the other sides, however, are somewhat larger for reasons relating to moulding as will be explained later.

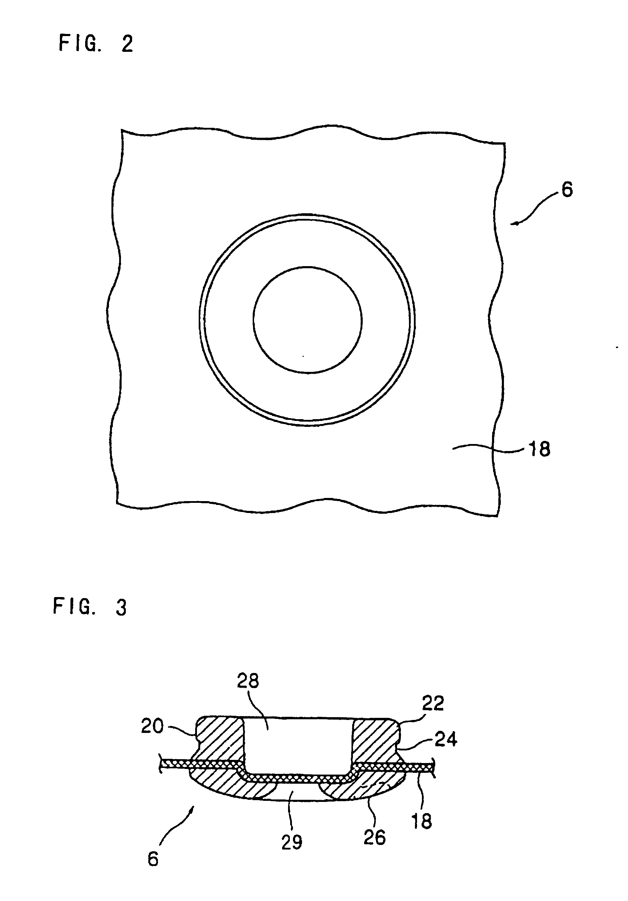

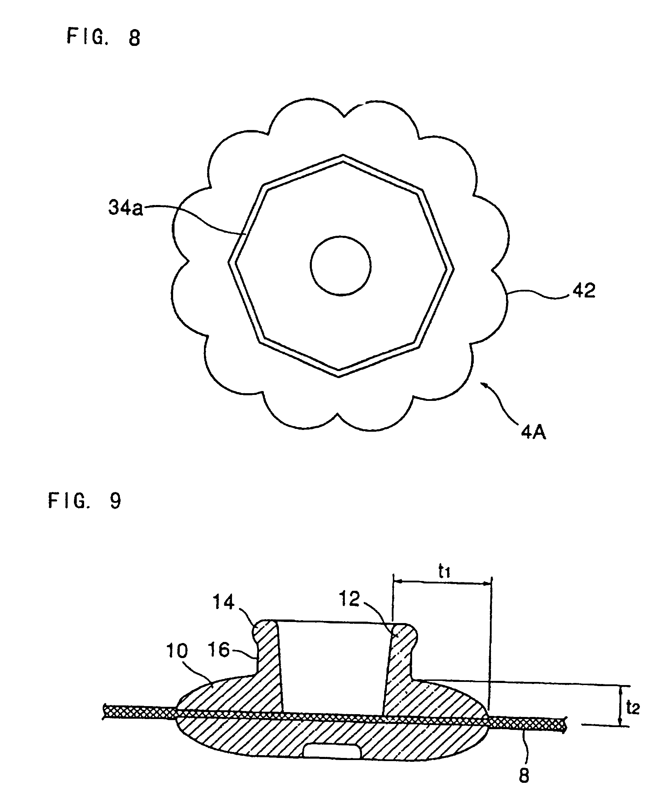

FIG. 2 is a plan view and FIG. 3 is a cross sectional view of a male part 6. As mentioned earlier in some aspects, the present invention is an improvement on the prior art with respect to this part. According to the prior art, as shown in FIG. 9, an engagement protrusion 12 stands upright from a base 10 that sandwiches a cloth tape 8. The engagement protrusion 12 of the male part has a bulging edge 14 for engagement around its tip and a concave part 16 to allow for expansion or shrinkage induced deformation of the elastic resin.

According to the embodiment of the present invention, as shown in FIG. 3, there is virtually no base. In this drawing, the part that adheres to the cloth tape 18 bulges slightly, but this level of bulging is not considered a base. It is also possible to design a male part that is completely free of such bulging. Because there is no base, the engagement protrusion 20 can be made shorter by the distance t₂ in FIG. 9. In the present embodiment, the cross section of the engagement protrusion 20 is formed thicker than in the prior art, but it is still less than the cross sectional width t₁ of the prior art having the base 10. As a result, it is possible to reduce the overall size of the male part 6 without changing the size of the engagement part.

The engagement protrusion 20 of the male part also has a bulging edge 22 for engagement around its tip and a concave part 24 to allow for expansion and shrinkage of the elastic resin.

To form this male part 6, a non-porous cloth tape 18 having a coarse texture that allows the percolation of molten resin under a moulding pressure is provided between upper and lower dies forming a space for moulding the fastener, and the cloth tape between an upper indentation 28 and a lower indentation 29 of the male part 6 is sandwiched and fastened by said upper and lower dies, after which synthetic resin is injected into the space for moulding. In FIG. 3, the small indentation indicated by numeral 26 corresponds to the injection port of the die. Because of this injection port, the width of the ring viewed from the back side is slightly larger than the width of the engagement protrusion 20 (i.e., the width of the ring viewed from the front side).

In this way, the front side and the back side of the male parts formed on either side of the cloth tape 18 are integrated by the synthetic resin percolating through the cloth tape 18. In the present embodiment, as described above, because the cloth tape positioned between the upper indentation 28 and the lower indentation 29 is sandwiched and fastened by the upper and lower dies, the area on the cloth tape that is subjected to the high injection pressure is smaller than in the prior art. Therefore, the tape rarely bends or undulates when the male parts are moulded. As a result, it is possible to avoid the situation in which the tape emerges or protrudes from the surface of the synthetic resin, an occurrence that tends to lessen the strength and spoil the appearance of the fastener.

The cloth tape 18 needs to be such that it allows the percolation of molten resin without being melted itself. Either a woven or knitted cloth, such as a cotton or blended yarn cloth can be used. For the synthetic resin, thermoplastic resin, for example, polyacetal molten resin can be used.

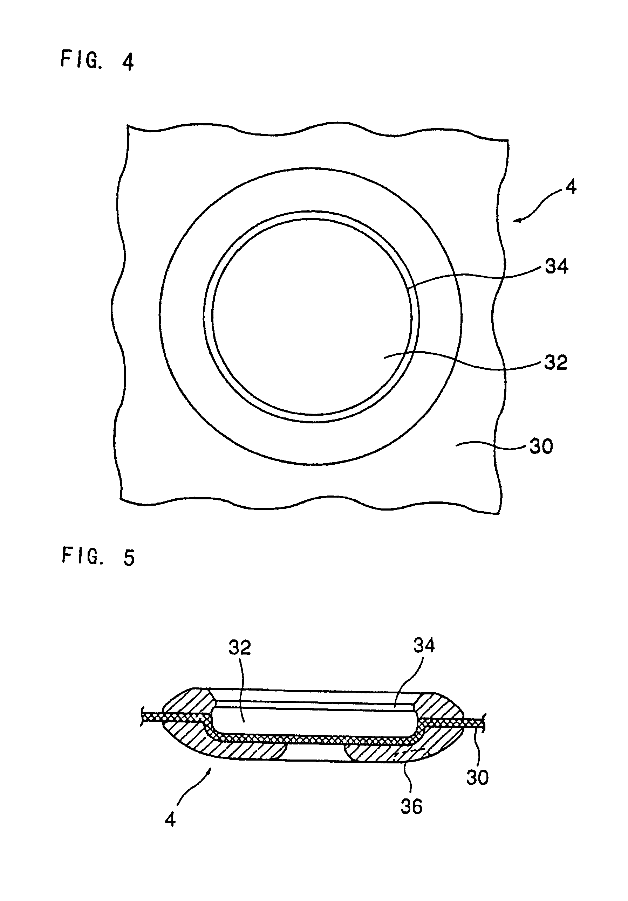

FIG. 4 is a plan view and FIG. 5 is a cross sectional view of a female part 4. An engagement indentation 32 is formed by synthetic resin on the cloth tape 30. On the inside of the opening of the engagement indentation 32 of the female part there is, an edge 34 that allows engagement is formed.

The method for moulding this female part is virtually the same as that for the male part 6. Accordingly, a detailed explanation thereof will be omitted. The small indentation indicated by reference 36 in FIG. 5 is the inlet through which resin is injected.

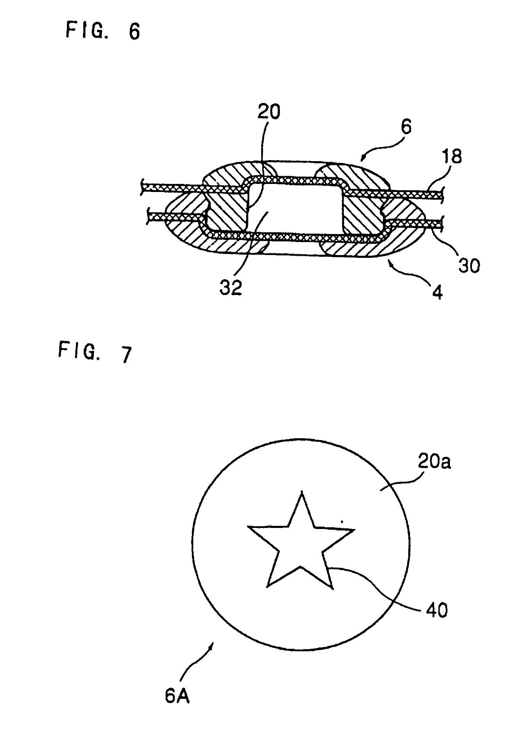

FIG. 6 shows a cross section of a male part 6 and a female part 4 embodying the present invention as they are engaged. A fastener embodying the present invention is used in the same way as conventional fasteners.

FIG. 7 is a plan view of a male part 6A according to a second embodiment of the present invention as viewed from the junction side. Because the inside 40 of the male part has no relevance to the engagement, it may be of any shape, e.g., a star shape as shown in FIG. 7. Any shape can be chosen from an aesthetic point of view. Numeral 20a indicates an engagement protrusion.

FIG. 8 is a plan view of a female part 4A according to a third embodiment of the present invention as viewed from the junction side. Because the outside profile 42 of the female part 4A has no relevance to the engagement, it may be of any shape, e.g., a flower shape as shown in FIG. 8. Any shape can be chosen from an aesthetic point of view.

In FIG. 8, the engagement edge 34a is polygonal (octagonal in FIG. 8). This female part can be engaged with a male part having a circular engagement edge to obtain a stronger engagement force than in the case of engaging a male part and a female part both having circular engagement edges. Although not shown in the drawings, a combination of a male part with a polygonal engagement edge and a female part with a circular engagement edge is also possible.

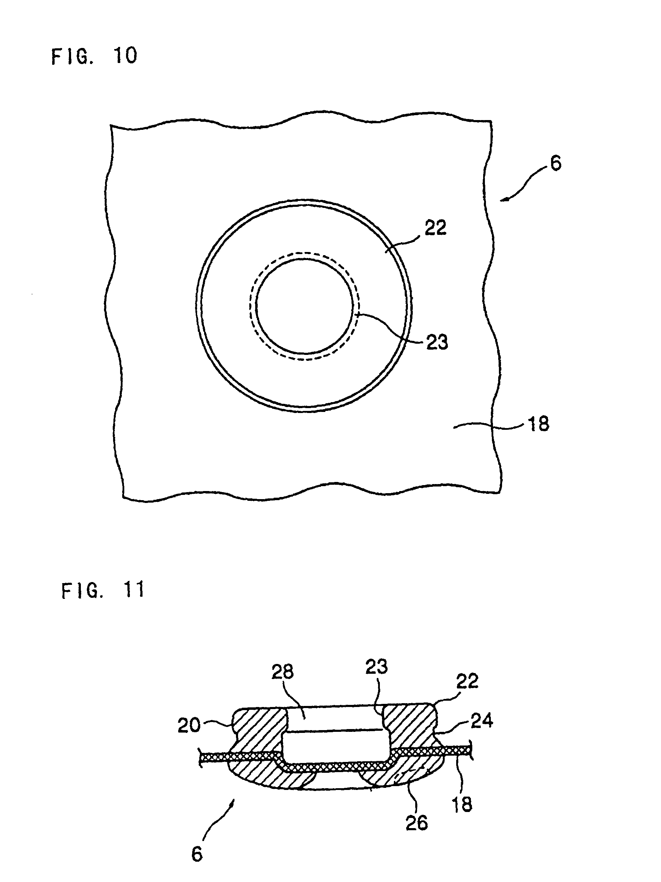

FIGS. 10 and 11 are a plan view and a cross sectional view respectively of a male part according to a fourth embodiment of the present invention. This male part is different from that of the first example in that the engagement protrusion 20 has at its tip not only an outside bulging edge 22 but also an inside bulging edge 23.

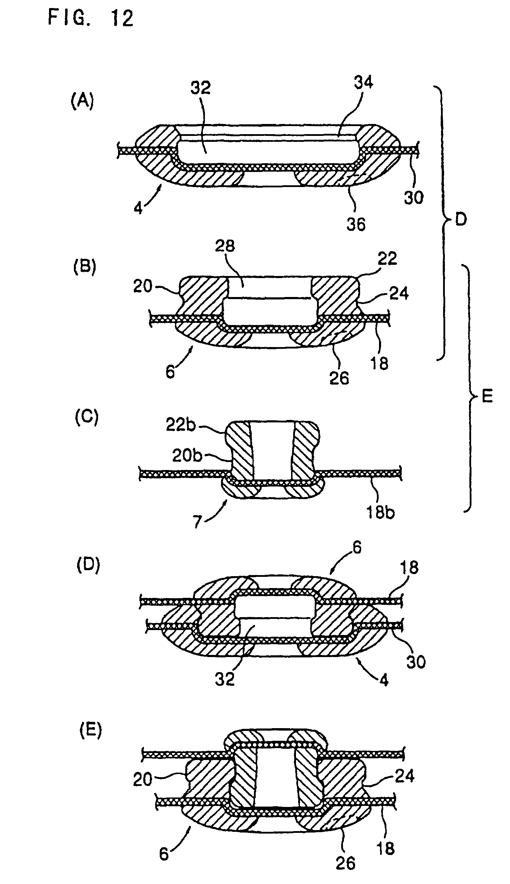

By adding an inside bulging edge 23, this male part can also function as a female part, when it is used with another male part 7 (FIG. 12(C)), by receiving the outside bulging edge 22b of the engagement protrusion 20b of the male part 7. As shown in FIG. 12 and explained earlier, the female part A and the male part B engage with each other to form an engagement condition D. Moreover, the male part B can engage with another male part C to form another engagement condition E.

Normally, in order to provide two types of fasteners of different sizes, four types of parts (i.e., two types each of male and female parts) are necessary. With the construction of the fourth embodiment, only three types of parts (i.e., one type of male part and two types of female parts) are necessary. Because a fewer number of parts are required, the number of dies can also be reduced, and less labor is required for manufacturing. Product control is also simplified. Moreover, it is possible for tapes provided with parts A, B and C of FIG. 12 to be arranged parallel at the same time and engaged selectively. In other words, at times part B is engaged with part A, whereas at other times part B is engaged with part C, turning over the fastener of B to face with the fastener of C. Such a construction can be used to selectively open or close the inner partitions of a bag.

## Claims

1. A tape-mounted fastener comprising a male tape and a female tape, the male tape comprising a cloth tape (18) on which at least one male part (6) is moulded and fastened, and the female tape comprising a cloth tape (30) on which at least one female part (4) is moulded and fastened, the or each male part (6) having an engagement protrusion (20) for coupling to a corresponding engagement indentation (32) of a female part (4), said male part (6) and said female part (4) being made of synthetic resin, said cloth tapes (18, 30) having a course texture which allows the percolation of molten resin under a moulding pressure through the tape, and said cloth tapes being uninterrupted within the boundaries of the male and female parts;
**characterised in that** for the or each male part (6), the outer boundary of the male part (6) where it is moulded on the cloth tape (18) is substantially the same size as the outer boundary of the engagement protrusion (20) on both sides of the cloth tape (18).

2. A tape-mounted fastener according to claim 1, wherein each part (6, 4) has a ring-shape appearance when viewed from either the front or the back.

3. A tape-mounted fastener according to claim 1 or 2, wherein the interior profile (40) of the engagement protrusions (20a) of the male parts (6A) is of a shape other than a circle.

4. A tape-mounted fastener according to any one of claims to 3, wherein the exterior profile (42) of engagement indentations of the female parts (4) is of a shape other than a circle.

5. A tape-mounted fastener according to any one of claims 1 to 4, wherein bulging edges (22, 23) for engagement are formed on both the outside and inside of the tip of the engagement protrusions of the male parts (6).

6. A tape-mounted fastener according to claim 5, wherein the inside bulging edges (23) of the male parts (6) can engage with the engagement protrusions of another group of male parts (7).

7. A method of manufacturing a tape-mounted fastener, the method comprising:
positioning a cloth tape (18, 30) in a moulding chamber having a shape corresponding to a male or female fastener (6, 4) to be manufactured, the male part having an engagement protrusion (20) for coupling to a corresponding engagement indentation (32) of a female part; and,
feeding a synthetic resin into the moulding chamber, to form the desired fastener moulded and fastened to the tape, the cloth tape being uninterrupted within the boundary of the fastener; **characterised in that**
the outer boundary of the male part (6) where it is moulded on the cloth tape (18) is substantially the same size as the outer boundary of the engagement protrusion (20) on both sides of the cloth tape (18), and **in that** the cloth tape (18) has a coarse texture which allows the percolation of molten resin under a moulding pressure through the tape;
and **in that** the method includes holding the cloth tape in a required position by upper and lower central projections of the moulding chamber during the injection of synthetic resin into the moulding chamber, the injection of synthetic resin into the moulding chamber being performed via an injection port in the moulding chamber on the fastener body.

8. A method according to claim 7, including the steps of moulding onto the cloth tape a male part (6) having an engagement protrusion (20) for coupling to a corresponding female part (4), the method including holding the cloth tape in a required position by projections of the moulding chamber which extend towards each other from upper and lower dies at a central region of the male part, such that after moulding the male part, the holding projections have formed an upper indentation (28) in the male part (6), inside the engagement protrusion (20) of the male part (6), and a lower indentation (29) on the underside of the male part (6).

9. A method according to claim 7, including the steps of moulding onto the cloth tape a female part (4) having an engagement indentation (32) for coupling to a corresponding male part (6), the method including holding the cloth tape (30) in a required position by projections of the moulding chamber which extend towards each other from upper and lower dies at a central region of the female part, such that after moulding the female part, the holding projections have formed an upper indentation in the female part forming the engagement indentation (32) of the female part (4), and a lower indentation on the underside of the female part (4).

## Patentansprüche

1. An einem Band befestigtes Befestigungsmittel mit einem Patrizenband und einem Matrizenband, wobei das Patrizenband ein Stoffband (18) aufweist, auf welchem mindestens ein Patrizenteil (6) geformt und befestigt ist, und das Matrizenband ein Stoffband (30) aufweist, auf welchem mindestens ein Matrizenteil (4) geformt und befestigt ist, wobei der oder jeder Patrizenteil (6) einen Eingriffsvorsprung (20) zum Verbinden mit einer entsprechenden Eingriffsvertiefung (32) eines Matrizenteils (4) hat, wobei der Patrizenteil (6) und der Matrizenteil (4) aus Kunstharz gefertigt sind, die Stoffbänder (18, 30) eine grobe Struktur haben, welche unter einem Formungsdruck den Durchfluss von geschmolzenem Harz durch das Band ermöglicht, und die Stoffbänder innerhalb der Begrenzungen der Patrizen- und Matrizenteile keine Unterbrechung aufweisen,
**dadurch gekennzeichnet, dass** für das oder jedes Patrizenteil (6) die äußere Begrenzung des Patrizenteils (6), wo es auf das Stoffband (18) geformt ist, im Wesentlichen dieselbe Größe hat wie die äußere Begrenzung des Eingriffsvorsprungs (20) auf beiden Seiten des Stoffbandes (18).

2. An einem Band befestigtes Befestigungsmittel nach Anspruch 1, wobei jeder Teil (6, 4) entweder von vorne oder von hinten betrachtet, ein ringförmiges Aussehen hat.

3. An einem Band befestigtes Befestigungsmittel nach Anspruch 1 oder 2, wobei das Innenprofil (40) der Eingriffsvorsprünge (202) der Patrizenteile (6A) eine Form hat, die sich von einem Kreis unterscheidet.

4. An einem Band befestigtes Befestigungsmittel nach einem der Ansprüche 1 bis 3, wobei das Außenprofil (42) von Eingriffsvertiefungen der Matrizenteile (4) eine Form hat, die sich von einem Kreis unterscheidet.

5. An einem Band befestigtes Befestigungsmittel nach einem der Ansprüche 1 bis 4, wobei sowohl an der Außenseite als auch an der Innenseite der Spitze der Eingriffsvorsprünge der Patrizenteile (6) gewölbte Ränder (22, 23) zum Eingriff gebildet sind.

6. An einem Band befestigtes Befestigungsmittel nach Anspruch 5, wobei die nach innen gewölbten Ränder (23) der Patrizenteile (6) mit den Eingriffsvorsprüngen einer anderen Gruppe von Patrizenteilen (7) in Eingriff kommen können.

7. Verfahren zur Herstellung eines an einem Band befestigten Befestigungsmittels, wobei das Verfahren aufweist:
Anordnen eines Stoffbandes (18, 30) in einer Formungskammer, deren Gestalt einem herzustellenden Außen- oder Innen-Befestigungsmittel (6, 4) entspricht, wobei der Patrizenteil einen Eingriffsvorsprung (20) zum Koppeln mit einer entsprechenden Eingriffsvertiefung (32) eines Matrizenteils hat, und
Zuführen eines Kunstharzes in die Formungskammer, um das gewünschte Befestigungsmittel zu bilden, das an dem Band geformt und befestigt ist, wobei das Stoffband innerhalb der Begrenzung des Befestigungsmittels keine Unterbrechung aufweist, **dadurch gekennzeichnet, dass**
die äußere Begrenzung des Patrizenteils (6), wo dieses an dem Stoffband (18) geformt ist, im Wesentlichen dieselbe Größe hat wie die äußere Begrenzung des Eingriffsvorsprungs (20) auf beiden Seiten des Stoffbands (18), und dass das Stoffband (18) eine grobe Struktur hat, die unter einem Formungsdruck den Durchfluss von geschmolzenem Harz durch das Band ermöglicht;
und dass das Verfahren das Halten des Stoffbandes in einer erforderlichen Position durch obere und untere zentrale Vorsprünge der Formungskammer während des Einspritzens des Kunstharzes in die Formungskammer beinhaltet, wobei das Einspritzen von Kunstharz in die Formungskammer über eine Einspritzöffnung in der Formungskammer an dem Befestigungsmittelkörper erfolgt.

8. Verfahren nach Anspruch 7, mit den Schritten des Formens eines Patrizenteils (6) auf das Stoffband, mit einem Eingriffsvorsprung (20) zum Verbinden mit einem entsprechenden Matrizenteil (4), wobei das Verfahren das Halten des Stoffbands (18) in einer erforderlichen Position durch Vorsprünge der Formungskammer beinhaltet, die sich in Richtung aufeinander zu von oberen und unteren Formen in einem zentralen Bereich des Patrizenteils erstrecken, so dass nach dem Formen des Patrizenteils die Haltevorsprünge eine obere Vertiefung (28) in dem Patrizenteil (6) im Inneren des Eingriffsvorsprungs (20) des Patrizenteils (6) und eine untere Vertiefung (29) an der Unterseite des Patrizenteils (6) gebildet haben.

9. Verfahren nach Anspruch 7, mit den Schritten des Formens eines Matrizenteils (4) auf das Stoffband, wobei das Matrizenteil eine Eingriffsvertiefung (32) zum Verbinden mit einem entsprechenden Patrizenteil (6) hat, wobei das Verfahren das Halten des Stoffbands (30) in einer erforderlichen Position durch Vorsprünge der Formungskammer beinhaltet, die sich in Richtung aufeinander zu von oberen und unteren Formen in einem zentralen Bereich des Matrizenteils erstrecken, so dass nach dem Formen des Matrizenteils die Haltevorsprünge eine obere Vertiefung in dem Matrizenteil, die die Eingriffsvertiefung (32) des Matrizenteils (4) bildet, sowie eine untere Vertiefung an der Unterseite des Matrizenteils (4) gebildet haben.

## Revendications

1. Bouton pression monté sur un ruban comprenant un ruban mâle et un ruban femelle, le ruban mâle comprenant un ruban de tissu (18) sur lequel au moins une partie mâle (6) est moulée et fixée et le ruban femelle comprenant un ruban de tissu (30) sur lequel au moins une partie femelle (4) est moulée et fixée, la ou chaque partie mâle (6) ayant une saillie de mise en prise (20) pour se coupler à une partie d'indentation de mise en prise (32) correspondante d'une partie femelle (4), ladite partie mâle (6) et ladite partie femelle (4) étant réalisées à partir de résine synthétique, lesdits rubans de tissu (18, 30) ayant une texture grossière qui permet l'infiltration de résine en fusion sous une pression de moulage à travers le ruban, et lesdits rubans de tissu étant ininterrompus dans les limites des parties mâle et femelle ;
**caractérisé en ce que** pour la ou chaque partie mâle (6), la limite externe de la partie mâle (6) où elle est moulée sur le ruban de tissu (18) est sensiblement de la même taille que la limite externe de la saillie de mise en prise (20) de chaque côté du ruban de tissu (18).

2. Bouton pression monté sur un ruban selon la revendication 1, dans lequel chaque partie (6, 4) a une apparence en forme d'anneau lorsqu'elle est observée soit de devant soit de derrière.

3. Bouton pression monté sur un ruban selon la revendication 1 ou 2, dans lequel le profil intérieur (40) des saillies de mise en prise (20a) des parties mâles (6A) est d'une forme différente d'un cercle.

4. Bouton pression monté sur un ruban selon l'une quelconque des revendications 1 à 3, dans lequel le profil extérieur (42) des indentations de mise en prise des parties femelles (4) est d'une forme différente d'un cercle.

5. Bouton pression monté sur un ruban selon l'une quelconque des revendications 1 à 4, dans lequel les bords de renflement (22, 23) pour la mise en prise sont formés à la fois à l'extérieur et à l'intérieur de la pointe des saillies de mise en prise des parties mâles (6).

6. Bouton pression monté sur un ruban selon la revendication 5, dans lequel les bords de renflement intérieurs (23) des parties mâles (6) peuvent se mettre en prise avec les saillies de mise en prise d'un autre groupe de parties mâles (7).

7. Procédé de fabrication d'un bouton pression monté sur un ruban, le procédé comprenant les étapes consistant à :
positionner un ruban de tissu (18, 30) dans une chambre de moulage ayant une forme correspondant à un bouton pression mâle ou femelle (6, 4) à fabriquer, la partie mâle ayant une saillie de mise en prise (20) pour se coupler à une indentation de mise en prise (32) correspondante d'une partie femelle ; et
alimenter une résine synthétique dans la chambre de moulage pour former le bouton pression souhaité moulé et fixé sur le ruban, le ruban de tissu étant ininterrompu dans la limite du bouton pression ; **caractérisé en ce que**
la limite externe de la partie mâle (6) où elle est moulée sur le ruban de tissu (18) est sensiblement de la même taille que la limite externe de la saillie de mise en prise (20) des deux côtés du ruban de tissu (18), et **en ce que** le ruban de tissu (18) a une texture grossière qui permet l'infiltration de la résine en fusion sous une pression de moulage à travers le ruban ;
et **en ce que** le procédé comprend l'étape consistant à maintenir le ruban de tissu dans une position requise grâce à des saillies centrales supérieure et inférieure de la chambre de moulage pendant l'injection de la résine synthétique dans la chambre de moulage, l'injection de la résine synthétique dans la chambre de moulage étant réalisée via un orifice d'injection dans la chambre de moulage sur le corps du bouton pression.

8. Procédé selon la revendication 7, comprenant l'étape consistant à mouler sur le ruban de tissu une partie mâle (6) ayant une saillie de mise en prise (20) pour se coupler à une partie femelle (4) correspondante, le procédé comprenant l'étape consistant à maintenir le ruban de tissu (18) dans une position requise grâce aux saillies de la chambre de moulage qui s'étendent l'une vers l'autre à partir des moules supérieur et inférieur au niveau d'une région centrale de la partie mâle, de sorte qu'après le moulage de la partie mâle, les saillies de maintien forment une indentation supérieure (28) dans la partie mâle (6), à l'intérieur de la saillie de mise en prise (20) de la partie mâle (6) et une indentation inférieure (29) sur la face inférieure de la partie mâle (6).

9. Procédé selon la revendication 7, comprenant l'étape consistant à mouler sur le ruban de tissu une partie femelle (4) ayant une indentation de mise en prise (32) pour se coupler à une partie mâle (6) correspondante, le procédé comprenant l'étape consistant à maintenir le ruban de tissu (30) dans une position requise grâce à des saillies de la chambre de moulage qui s'étendent l'une vers l'autre à partir des moules supérieur et inférieur au niveau d'une région centrale de la partie femelle, de sorte qu'après le moulage de la partie femelle, les saillies de maintien forment une indentation supérieure dans la partie femelle formant l'indentation de mise en prise (32) de la partie femelle (4), et une indentation inférieure sur la face inférieure de la partie femelle (4).
